# EUROPÄISCHE PATENTANMELDUNG

(11) **EP 2 299 340 A1**
(43) Veröffentlichungstag der Anmeldung: **23.03.2011**
(21) Anmeldenummer: 09011843.1
(22) Anmeldetag: 17.09.2009
(51) Int. Cl.: G05B 19/042, G05B 15/02

(54) **Zentrale, System und Verfahren zur Steuerung von Funktionseinrichtungen in Gebäuden**

(71) Anmelder: Barbedor, Patrick, 6637 Wasserbillig (LU)
(72) Erfinder: Barbedor, Patrick, 6637 Wasserbillig (LU)
(74) Vertreter: Kutsch, Bernd

(57) **Zusammenfassung**

Es wird ein Zentrale (11), ein System (10) und ein Verfahren zur Steuerung von Funktionseinrichtungen in Gebäuden vorgeschlagen. Das System (10) weist eine Zentrale (11) mit einer Zentraleinheit (15) und eine Mehrzahl von Schaltkreisen (25, 25') auf, in die jeweils ein nicht adressierbares Bauelement (18, 18'), das mittels der Zentrale (11) steuerbar und/oder regelbar ist, sowie die Zentraleinheit (15) eingebunden ist. Der Zentrale (11) ist einer Eingabeeinrichtung (12) zugeordnet, mit der die Zentraleinheit (15) steuerbar und darüber so ein Übertragen eines Signals an das Bauelement (18, 18') oder ein Schalten der Schaltkreise (25, 25') vorgenommen werden kann. In jedem Schaltkreis (25, 25') ist ein von der Zentraleinheit (15) ansteuerbares Ausgangselement (14, 14') vorgesehen, das der Zentrale (11) zugeordnet und mit einem Ausgang (21, 21') der Zentraleinheit (15) und dem Bauelement (18, 18') verbunden ist. Jedem der Schaltkreise (25, 25') ist ein Eingang (20, 20') der Zentraleinheit (15) zugeordnet. Die Schaltkreise (25, 25') sind zwischen dem Ausgangselement (14, 14') und dem Bauelement (18, 18') für den Betrieb mit Netzwechselspannung und zwischen dem Ausgang (21, 21') und dem Ausgangselement (14, 14') für den Betrieb mit Kleinspannung konfiguriert.

## Beschreibung

### Stand der Technik

Die Steuerung und/oder Kommunikation von Funktionseinrichtungen wie elektrischen Verbrauchern, d. h. insbesondere Versorgungseinheiten von Aktoren wie Lampen, Rolladen- oder Jalosusiemotoren, Heizungsstellventilen, sonstige Stellmotoren, Fernseher, Waschmaschinen, Kücheninstallationen, Telefonanlagen, Türsprechanlagen, Alarmanlagen oder Videoanlagen, in Gebäuden und/oder im Umfeld eines Gebäudes mittels einer zentralen Steuerungs- und/oder Regelungseinheit ist bekannt.

So beschreibt DE 299 12 385 U1 eine zentrale Haussteuerung für busfähige Teilnehmer in der Gebäudesystemtechnik, wobei die Teilnehmer über eine serielle digitale Datenleitung (Busleitung) unmittelbar mit einer programmierbaren Zentrale verbunden sind. Die Teilnehmer sind dabei Sensoren, Aktoren oder andere Teilnehmer wie Verbraucher. Als Eingabegerät ist eine graphische Benutzerschnittstelle in Form eines als Touchscreen-Bildschirm ausgestalteten LCD-Flachbildschinns vorgesehen.

Ähnliche, auf Busleitungen aufbauende Systeme sind auch aus US 5,086,385 und JP-A-61-065555 bekannt.

Derartige Busstysteme haben den Nachteil, dass ihre Installation, insbesondere ihre nachträgliche Installation in einem bestehenden Gebäude, sehr aufwändig und kostenintensiv ist, da einerseits eine Vielzahl von Busleitungen im Gebäude verlegt werden und andererseits spezielle adressierbare Sensoren und/oder Schaltelemente und Aktoren oder andere Verbraucher bzw. Teilnehmer eingesetzt werden müssen. Dies wird bereits in DE 299 12 385 U1 selbst erkannt, wo auch vorgeschlagen wird, die Bussignale nicht über separate Busleitungen zu führen, sondern sie der vorhandenen Netzleitung aufzuprägen und so an die Teilnehmer zu übermitteln. Dies löst zwar das Problem der Busleitungen, führt aber zu elektrischen Problemen, einer erhöhten Störanfälligkeit des Systems, und, vor allem, befreit nicht von der Notwendigkeit des Einsatzes teurer adressierbarer Teilnehmer, d. h. entsprechernder Sensoren, Schaltelemente, Aktoren oder anderer elektrischer Verbraucher.

Die in DE 299 12 385 U1 bereits angedeuteten Nachteile werden auch in DE 199 43 450 A1 diskutiert, wo vorgeschlagen wird, statt zu installierender Busleitungen eine drahtlose Übertragung mittels HF-Signalen, Funksignalen, Infrarotsignalen oder Ultraschallsignalen von adressierbaren Sensor- und/oder adressierbaren Aktorsignalen an bzw. von der zentralen Steuereinrichtung vorzusehen. Die zentrale Steuereinrichtung ist dazu beispielsweise als Microcontroller mit A/D- und D/A-Umsetzer ausgestaltet und steht drahtlos mit Funktionseinrichtungen und Empfangsbaugruppen in Verbindung. Daneben ist dort vorgesehen, dass die Funktionseinrichtungen, die drahtlos mit der zentralen Steuereinrichtung kommunizieren, periodisch abfragen, ob zentrale Steuereinrichtung ordnungsgemäß arbeitet ("Polling") und, falls nicht, in einen von der Zentrale ungesteuerten Normalbetrieb übergehen.

Die Lösung gemäß DE 199 43 450 A1 vermeidet zwar die Installation von Busleitungen, vergrößert aber die Störanfälligkeit des Systems, erzeugt einen erheblichen Elektrosmog in dem betreffenden Gebäude und verlangt den Einsatz sehr teurer Sensoren und Aktoren oder anderer elektrischer Verbraucher, da diese jeweils in der Lage sein müssen, drahtlos mit der Zentrale zu kommunizieren. Insbesondere kann dabei nicht auf preiswerte, handelsübliche Bauelemente in Gebäuden wie übliche Schalter oder Elektromotoren zurückgegriffen werden, sondern diese müssen entweder drahtlos steuerbar und (digital) adressierbar sein, oder es muss jeweils ein zusätzlicher, adressierbarer Aktor vorgesehen sein, der die bereits vorhandenen Schalter oder Elektromotoren steuert. Insgesamt ist diese Lösung daher zwar hinsichtlich der fehlenden Busleitungen preiswerter als in DE 299 12 385 U1, hinsichtlich der drahtlos steuerbaren Bauelemente aber teurer. Insbesondere können auch bei dem Vorschlag gemäß DE 199 43 450 A1 nur addressierbare Funktionseinrichtungen der Empfangsbaugruppen eingesetzt werden.

Zu DE 199 43 450 A1 ähnliche Vorschläge sind auch in EP 1 260 886 A2 und WO 2005/047996 A2 zu finden.

In DE 10 2004 005 962 A1 wird ein anderer Weg zur Überwindung der in DE 199 43 450 A1 erkannten Nachteile von herkömmlichen Bussystemen beschrieben. Dort ist vorgesehen, dass von einer zentralen Steuerungs- und/oder Regelungseinheit einzeln ansteuerbare Versorgungseinheiten über sternförmig angeordnete separate Steuerleitungen auf 24-Volt-Basis mit der zentralen Einheit verbunden sind. Die zentrale Einheit ist dabei als normaler Verteilerkasten mit einer integrierten CPU ausgestaltet. Diese Lösung vermeidet zwar das Erfordernis des Einsatzes adressierbarer, über eine Busleitung oder Enthernet digital steuerbarer Versorgungseinheiten, d. h. erlaubt die Verwendung in dieser Hinsicht preiswerterer Versorgungseinheiten, allerdings erfordert diese Lösung wieder den Einbau neuer 24-Volt Steuerleitungen an alle Verbraucher, was insbesondere in bestehenden Gebäuden arbeits- und kostenintensiv ist. Daneben ist bei der Lösung gemäß DE 10 2004 005 962 A1 erforderlich, dass die angesteuerten Versorgungseinheiten über eine 24-Volt-Leitung steuerbar, selbst aber in das haushaltsübliche 230-Volt-Stromnetz integriert sein müssen, d. h. man muss auch hier wieder lokal am Ort der jeweiligen Versorgungseinheiten spezielle Bauelemente einsetzen bzw. die bestehenden Bauelemente ersetzen, was kostenintensiv ist und nicht zuletzt aufwändige Elektroinstallationsarbeiten im gesamten Gebäude erfordert.

Die DE 10 2004 005 962 A1 beschreibt schließlich, dass sich das dort vorgeschlagene System mit "wenigen Handgriffen deaktivieren" und in den "klassischen Betriebszustand" rückführen lässt, ohne dass näher erläutert wird, wie dies geschehen soll. Vermutlich wird dazu in DE 10 2004 005 962 A1 die zentrale Steuerungs- und/oder Regelungseinheit einfach stillgelegt.

Aufgabe der vorliegenden Erfindung war die Bereitstellung einer Zentrale, eines Systems und eines damit ausgeführten Verfahrens zur Steuerung von Funktionseinrichtungen in und/oder im Umfeld von Gebäuden, die bzw. das einfach, kostengünstig und flexibel auch in bestehende Gebäude installierbar ist.

### Vorteile der Erfindung

Gegenstand der Erfindung ist eine Zentrale und ein System zur Steuerung von Funktionseinrichtungen in und/oder im Umfeld von Gebäuden nach den Ansprüchen 1 bzw. 8, sowie ein Verfahren zur Steuerung von Funktionseinrichtungen in und/oder im Umfeld von Gebäuden nach dem Anspruch 15.

Die Unteransprüche betreffen bevorzugte Ausgestaltungen und Weiterbildungen der Erfindung.

Das erfindungsgemäße System und Verfahren hat den Vorteil, dass außerhalb der Zentrale weitgehend bzw. sogar ausschließlich auf preiswerte, handelsübliche elektrische Bauelemente bzw. Verbraucher zurückgegriffen werden kann, die nicht wie beispielsweise bei bekannten Bussystemen adressierbar sein müssen. Auch kann die Installation von neuen elektrischen Leitungen gering gehalten werden oder, je nach Ausgangssituation, sogar ganz entfallen. So ist in der Regel nur die Instaliation einer zusätzlichen mehradrigen Netzspannungsleitung pro Raum in dem Gebäude zu der Zentrale erforderlich, sofern eine freie solche Leitung nicht schon in vorhanden ist. Diese zusätzliche Netzstromleitung ist vorzugsweise eine mehradrige Leitung mit 2 bis 30 Adern, beispielsweise 16 Adern, da für jeden, separat von anderen Verbrauchern in dem betreffenden Raum anzusteuernden Verbraucher bzw. für jeden Befehl der Zentrale (wie beispielsweise "Rolladen auf" und "Rolladen zu" an den Rolladenmotor) zwei Adern zur Verfügung stehen sollten.

Vorteilhaft ist auch, dass das System schon in seiner Konstruktion so ausgelegt ist, dass es flexibel auf die jeweilige Gebäudesituation (Anzahl der Zimmer, Architektur, Außenanlagen, Anwendungsbereiche des Systems usw.) anpassbar ist, ohne dass dazu eine jeweils individuell an das Gebäude angepasste Verschaltung der Zentrale vorgenommen werden muss. Die individuelle Anpassung an das Gebäude erfolgt vorteilhaft - neben der meist erforderlichen Installation der vorstehend erwähnten zusätzlichen Netzleitung pro Raum - in der Regel lediglich über das Bedienterminal, d. h. die bereitgestellte Software, und die darüber bewirkte Einstellung bzw. Pro. grammierung der Zentraleinheit.

Das System bzw. Verfahren ist weiter vorteilhaft außerhalb der Zentrale ohne busfähige. d. h. letztlich ohne über (digitale) Adressierung steuerbare oder über Adressierung mit der Zentraleeinheit kommunizierende Bauelemente realisierbar, so dass insbesondere keine Busleitung zu dem oder eine drahtlose Signalübertragung an das adressierbare Bauelement erforderlich ist. Dabei ist das betreffende, nicht adressierbare Bauelement auch direkt in den betreffenden Schaltkreis integriert, d. h. es sind auch keine zusätzlichen, dem betreffenden Bauelement jeweils zugeordnete adressierbare Bauteile erforderlich oder vorgesehen.

Bei dem erfindungsgemäßen System muss vorteilhaft das lokal jeweils eingesetze elektrische Bauelement auch nicht über eine zusätzlich vorzusehende Steuerleitung auf Kleinspannungs- oder Niedervoltbasis, beispielsweise 24-Volt oder 12-Volt, gesteuert werden. Insofern kann auch hier auf den Einsatz entsprechender spezieller Bauelemente und die Installation entsprechender Steuerleitungen, wie sie den üblichen elektrischen Installationen in Gebäuden wie Wohnungen, Büros oder Ein-oder Mehrfamilienhäusem oder im Umfled von Gebäuden wie Garagen, Terrassen, Eingangsbereichen, Gartenanlagen, oder Tiefgaragen fremd sind, verzichtet werden.

Die erfindungsgemäße Zentrale hat den Vorteil, dass sie standardisiert vorgefertigt und verschaltet werden. Insbesondere kann die Zentrale ein Schaltschrank sein, der universell einsetzbar ist, d. h. in dem keine an das jeweilige Gebäude angepasste Veränderung der elektrischen Installationen und Schaltungen vorgenommen werden muss. Die individuelle Anpassung an das Gebäude kann somit ausschließlich über die Programmierung der Zentrale bzw. die Steuerung durch die Eingabeinrichtung und den jeweiligen Anschluss der elektrischen Bauelemente im Gebäude an den Schaltkasten erfolgen.

### Zeichnungen

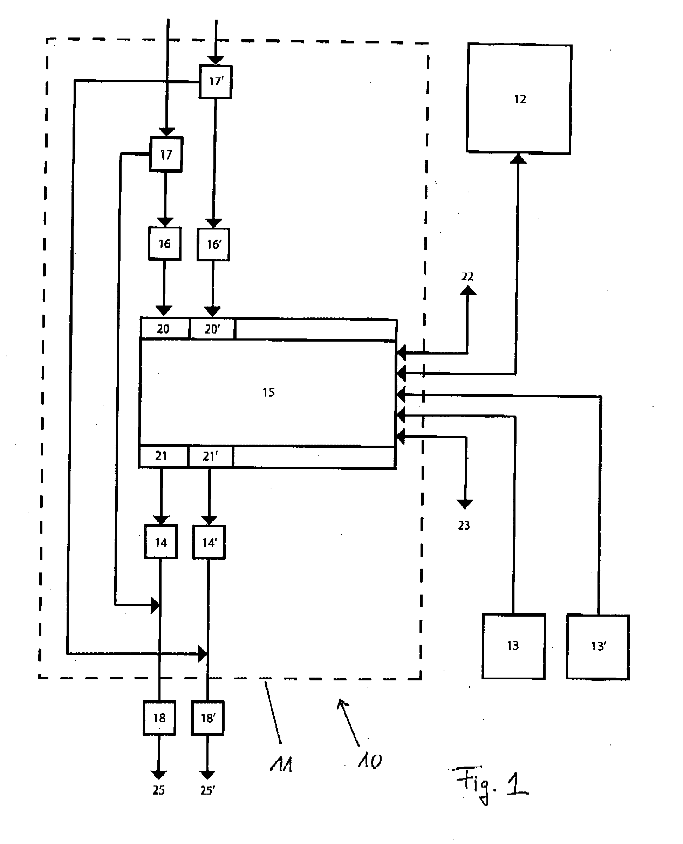

Die Figur 1 zeigt eine Prinzipskizze der Verschaltung und des Zusammenwirkens der einzelnen Komponenten in einem Ausführungsbeispiel des erfindungsgemäßen Systems.

### Ausführungsbeispiele

Die Figur 1 erläutert ein universelles Haussteuerungssystem, welches eine speicherprogrammierbare Steuerung, ein Bedienterminal und eine Wetterstation aufweist und das damit vorzugsweise bzw. bei Bedarf alle elektrischen Verbraucher im Haus steuert. Das System zeichnet sich besonders dadurch aus, dass es ohne spezielle, adressierbare Bauelemente wie Aktoren, Motoren oder Schalter auskommt. Bevorzugt ist das erfindungsmäße System zum Einsatz in einem Wohnhaus oder einer Wohnung vorgesehen.

Alle herkömmlichen 230 Volt Wechselspannungsschaltsignale im Haus, die letztlich zu einem elektrischen Bauelement bzw. elektrischen Verbraucher führen, werden mittels Eingangsrelais, die nur oder auch zur Spannungsumwandlung dienen, auf die Eingänge der speicherprogrammierbaren Steuerung geschaltet. Die CPU bzw. Zentraleinheit wertet den jeweiligen Eingangssignalzustand und/oder die Signaländerung aus, und gibt das Ergebnis des Programms, mittels Ausgangsrelais an den oder die elektrischen Bauelemente bzw. elektrischen Verbraucher mit einem 230 Volt Wechselspannungsschaltsignal (in Mitteleuropa) weiter. Die Adressierung ergibt sich automatisch aus dem gewählten Eingang der speicherprogrammierbaren Steuerung bzw. Zentraleinheit und seinem Programm.

Das Haussteuerungssystem gemäß Figur 1 bietet weiter die Möglichkeit, mit Hilfe eines Umschalters bzw. Überbrückungsmittels vorzugsweise jeden Schaltkreis separat zwischen zwei Modi umzuschalten. Im ersten Modus werden die 230 Volt Wechselspannungsschaltsignale des betreffenden Schaltkreises auf die Steuerung übertragen, in Kleinspannung umgewandelt, verarbeitet und ausgewertet; im anderen Modus wird das 230 Volt Eingangsschaltsignal des des betreffenden Schaltkreises unter Umgehung der Zentraleinheit direkt zum angeschlossenen elektrischen Verbraucher weitergeleitet.

Dies hat den Vorteil, dass bei Störung oder Ausfall eines oder mehrerer digitalen Eingänge oder Ausgänge der Zentraleinheit, mittels beschriebener Umschaltung der oder die elektrischen Verbraucher in dem jeweiligen Schaltkreis weiterhin über die herkömmliche Hauselektrik betrieben werden können. Die anderen Schaltkreise bleiben davon unberührt und können weiterhin über die Zentraleinheit gesteuert werden.

Im Einzelnen zeigt Figur 1 ein System 10 zur Steuerung von Funktionseinrichtungen in und/oder im Umfeld von Gebäuden, wobei das System 10 eine Zentrale 11 mit einer programmierbaren Zentraleinheit 15 und eine Mehrzahl von elektrischen Schaltkreisen 25, 25' aufweist. In die Schaltkreise 25, 25' ist jeweils mindestens ein nicht adressierbares elektrisches Bauelement 18, 18', das mittels der Zentrale 11 steuerbar und/oder regelbar ist, sowie die Zentraleinheit 15 elektrisch eingebunden. Das nicht adressierbare elektrisches Bauelement 18, 18' ist somit insbesondere nicht busfähig. Der Zentrale 11, die vorzugsweise als Schaltschrank ausgebildet ist, ist mit mindestens einer Eingabeeinrichtung 12 verbunden, mit der die Zentraleinheit 15 steuerbar und/oder programmierbar ist, und über die ein Übertragen eines elektrischen Signals an das elektrische Bauelement 18, 18' oder ein Schalten der Schaltkreise 25, 25' veranlassbar ist. In jedem der Schaltkreise 25, 25' ist weiter ein von der Zentraleinheit 15 elektrisch ansteuerbares oder schaltbares Ausgangselement 14, 14' vorgesehen, das der Zentrale 11 zugeordnet und einerseits mit einem dem Ausgangselement 14, 14' jeweils zugeordneten Ausgang 21, 21' der Zentraleinheit 15 und andererseits mit dem elektrischen Bauelement 18, 18' elektrisch verbunden ist. Jedem der Schaltkreise 25, 25' ist daneben ein Eingang 20, 20' der Zentraleinheit 15 zugeordnet. Die Schaltkreise 25, 25' zwischen dem Ausgangselement 14, 14' und dem elektrischen Bauelement 18, 18' sind für den Betrieb mit einer Netzwechselspannung, d. h. beispielsweise 230 Volt Wechselspannung, vorgesehen. Zwischen dem dem Ausgangselement 14, 14' zugeordneten Ausgang 21, 21' der Zentraleinheit 15 und dem Ausgangselement 14, 14' sind die Schaltkreise 25, 25' für den Betrieb mit einer Kleinspannung, d. h. beispielsweise 24 Volt Gleichspannung, vorgesehen. Vorzugsweise ist den Schaltkreisen 25, 25' gemäß Figur 1 jeweils ein separater Eingang 20, 20' und jeweils ein separater Ausgang 21, 21' der Zentraleinheit 15 zugeordnet.

Die Eingabeeinrichtung 12 ist ein bevorzugt übliches Bedienterminal, insbesondere ein Touchscreen-Terminal.

Die Figur 1. zeigt weiter, dass die Zentraleinheit 15 mit einem ersten Signalgeber 13 und einen zweiten Signalgeber 13' verbunden ist. Ein derartiger Signalgeber 13, 13' ist nicht zwingend für das erfindungsgemäße System 10 erforderliche, jedoch sehr vorteilhaft, um nicht nur eine einfache, beispielsweise nur zeitliche Steuerung vornehmen zu können. Er erlaubt es vielmehr, dass das System 10 gezielt auf eine Veränderung äußerer Umstände, wie beispielsweise des Wetters, reagieren kann.

Der erste Signalgeber 13 bzw. der zweite Signalgeber 13' kann beispielsweise jeweils ein Sensor, ein Regengeber, ein Thermometer, ein Windstärkemesser, ein Regenmengenmesser, ein Barometer, ein Luftfeuchtemesser, ein Windrichtungsmesser, ein Helligkeitsmesser wie eine Fotozelle oder eine Kombination einer oder mehrerer dieser Elemente sein oder umfassen.

Vielfach ist es auch ausreichend, wenn nur ein Signalgeber 13, vorzugsweise in Form einer Wetterstation zur Erfassung von Wetterdaten und Weiterleitung entsprechender Signale an einen zugeordneten Eingang der Zentraleinheit 15, vorgesehen ist.

Die in dem System 10 an den elektrischen Verbrauchern bzw. Bauelementen 18, 18' anliegende Netzwechselspannung ist die landesübliche Wechselspannung des Stromnetzes, d. h. entweder 100 Volt wie in Japan, ca. 110-120 Volt wie in den USA, ca. 230 Volt wie Mitteleuropa, oder grundsätzlich auch ca. 380 bis 400 Volt Dreiphasenwechselspannung, was jedoch wohl nur in Ausnahmefällen gewünscht sein wird. Bevorzugt ist der Einsatz üblicher 230 Volt Netzwechselspannung.

Die in der Zentrale 11 eingesetzte Kleinspannung ist eine Wechselspannung unter 50 Volt Effektivwert oder eine Gleichspannung unter 120 Volt ist, vorzugsweise eine Gleichspannung. Bevorzugt wird als Kleinspannung eine Gleichspannung von 24 Volt eingesetzt, wie sie üblicherweise als Eingangs- oder Ausgangsspannung an speicherprogrammierbaren Steuereinheiten bereitgestellt bzw. eingesetzt wird.

Die Zentraleinheit 15 ist beispielsweise ein Computer oder eine speicherprogrammierbare Steuereinheit mit CPU. Bevorzugt wird eine CPU der MELSEC System Q Serie von Mitsubishi Electric-Europe B.V. eingesetzt.

Das elektrische Bauelement 18. 18' ist in der Regel ein elektrischer Verbraucher und kann, je nach nach Bedarf und Schaltkreis eine Sprinkleranlage, ein Markisenmotor, ein Garagentorantrieb, ein Handtuchheizkörper, ein Rolladen- und/oder Jalouslemotor, ein Heizungsthermostat und/oder -stellventil, eine Heizungstemperaturabsenkung, ein Stellmotor, eine Steckdose, eine Haustürbeleuchtung, eine Sirene, ein Haustüröffner und andere schaltbare elektrische Verbraucher. In der Regel werden mehrere verschiedene der Bauelemente 18, 18' über die einzelnen Schaltkreise 25, 25' mit der Zentrale 11 verschaltet.

Die Überbrückungsmittel 17, 17' sind vorzugsweise Schalter, die für den Betrieb mit der Netzwechselspannung ausgelegt sind. Ein Schalten der Überbrückungsmittel 17, 17' überbrückt in dem betreffenden Schaltkreis 25, 25' die Zentraleinheit 15, die Ausgangselemente 14, 14' und die Eingangselemente 16, 16'.

Die Zentrale 11 ist vorzugsweise ein Schaltschrank, in dem zumindest die Ausgangselemente 14, 14', bevorzugt aber die Ausgangselemente 14, 14', die Eingangselemente 16, 16' jedes Schaltkreises 25, 25' und auch die Überbrückungsmittel 17, 17' angeordnet und elektrisch verschaltet sind.

Die Schaltung der Ausgangselemente 14, 14' erfolgt von der Zentraleinheit 15 vorzugsweise digital über die erläuterte Kleinspannung.

Die Schaltkreise 25, 25' sind, wie gezeigt, in Bezug auf die Zentraleinheit 15 parallel zueinander geschaltet.

Bevorzugt sind mehr als 16 der Schaltkreise 25, 25', insbesondere zwischen 32 und 192, beispielsweise 112, der Schaltkreise 25, 25' vorgesehen, von denen der Übersichtlichkeit halber in Figur 1 nur zwei dargestellt sind. Diese Schaltkreise alle analog den Schaltkreisen 25, 25' aufgebaut.

Den Schaltkreisen 25, 25' Ist vorzugsweise jeweils ein separater Eingang 20, 20' und ein separater Ausgang 21, 21' der Zentraleinheit 15 zugeordnet. Bei Bedarf können jedoch auch mehrere elektrische Bauelemente 18, 18' mit einem gemeinsamen Ausgang 21, 21' der Zentraleinheit 15 verschaltet sein, dies ist aber nicht bevorzugt.

Die Kleinspannungsausgangssignale der Zentraleinheit 15 an den Ausgängen 21, 21' schalten über die Ausgangselemente 14, 14' in dem betreffenden Schaltkreis 25, 25' die elektrischen Bauelemente 18, 18'.

Das System 10 gemäß Figur 1 zeigt weiter ein erstes Eingangselement 16 in einem ersten Schaltkreis 25 und ein zweites Eingangselement 16' in einem zweiten Schaltkreis 25'. Beide Eingangselemente 16, 16' sind nicht zwingend vorhanden, sind aber Teil des erläuterten bevorzugten Ausführungsbeispiels. Auch muss nicht jeder Schaltkreis 25, 25' zwingend ein deratiges Eingangselement 16, 16; aufweisen; dies ist aber bevorzugt.

Falls die Eingangselemente 16 bzw. 16' in einem Schaltkreis 25, 25' nicht vorhanden sind, liegt die Netzwechselspannung in dem betreffenden Schaltkreis 25, 25' direkt am zugeordneten Eingang 20, 20' der Zentraleinheit 15 an. Dies ist möglich, wenn die Zentraleinheit mit einer entsprechenden Eingangskarte versehen ist. Eine derartiger Aufbau birgt jedoch ein erhöhtes Risiko einer Beschädigung der Zentraleinheit bei einer Fehlfunktionen im Schaltkreis oder unter externem Einfluss. Insofern ist der Aufbau gemäß Figur 1 der bevorzugte.

Das zwischen den Eingangselementen 16, 16' und den zugeordneten Eingängen 20, 20' der Zentraleinheit 15 jeweils anliegende elektrische Signal ist entsprechend vorzugsweise wieder ein digitales Kleinspannungssignal von beispielsweise 24 Volt Gleichspannung, wie es auch zwischen den Ausgängen 21, 21' und den Ausgangselementen 14, 14' anliegt.

Die Figur 1 zeigt weiterhin, dass die Zentraleinheit 15 einen vorzugsweise digitalen Eingang 20 des ersten Schaltkreises 25, einen vorzugsweise digitalen Eingang 20' des zweiten Schaltkreises 25', einen digitalen Ausgang 21 des ersten Schaltkreises 25 und einen digitalen Ausgang 21' des zweiten Schaltkreis 25' aufweist.

Darüber hinaus ist vorgesehen, dass die Zentraleinheit 15 bzw, alternativ oder gleichzeitig auch die Eingabeeinrichtung 12 eine Kommunikationsschnittstelle 22 aufweist, über die ein externer Zugriff auf die Zentraleinheit 15 z. B. via Internet, intemetfähiges Mobilfunktelefon oder Computer erfolgen kann. Bevorzugt weist die Eingabeeinrichtung 12 statt direkt die Zentraleinheit 15 eine solchen Kommunikationsschnittstelle 22 auf.

Weiter weist die Zentraleinheit 15 bzw. alternativ oder gleichzeitig auch die Eingabeeinrichtung 12 eine Kommunikationsschnittstelle 23 auf, über die ein Signal oder eine Information (wie eine E-mail oder eine SMS) an ein externes Bauteil wie ein internetfähiges Mobilfunktelefon, eine Brandmeldezentrale oder einen Computer erfolgen kann, um so beispielsweise den Hausbesitzer, die Polizei oder die Feuerwehr zu kontaktieren.

## Patentansprüche

1. Zentrale, insbesondere Schaltschrank, zur Steuerung von Funktionseinrichtungen in und/oder im Umfeld von Gebäuden, wobei die Zentrale (11) eine programmierbare Zentraleinheit (15) und eine Mehrzahl von elektrischen Schaltkreisen (25, 25') aufweist, die mit der Zentraleinheit (15) elektrisch verbunden sind, wobei in die Schaltkreise (25, 25') jeweils mindestens ein nicht adressierbares elektrisches Bauelement (18, 18'), das mittels der Zentrale (11) steuerbar und/oder regelbar ist, einbindbar ist, wobei der Zentrale (11) mit einer Eingabeeinrichtung (12) verbindbar ist, mit der die Zentraleinheit (15) steuerbar und/oder programmierbar und über die ein Übertragen eines elektrischen Signals an das elektrische Bauelement (18, 18') und/oder ein Schalten der Schaltkreise (25, 25') veranlassbar ist, wobei in jedem der Schaltkreise (25, 25') ein von der Zentraleinheit (15) elektrisch ansteuerbares oder schaltbares Ausgangselement (14, 14') vorgesehen ist, das der Zentrale (11) zugeordnet und einerseits mit einem dem Ausgangselement (14, 14') jeweils zugeordneten Ausgang (21, 21') der Zentraleinheit (15) elektrisch verbunden und andererseits mit dem elektrischen Bauelement (18, 18') elektrisch verbindbar ist, sowie jedem der Schaltkreise (25, 25') ein Eingang (20, 20') der Zentraleinheit (15) zugeordnet ist, und wobei die Schaltkreise (25, 25') zwischen dem Ausgangselement (14, 14') und dem einbindbaren elektrischen Bauelement (18, 18') für den Betrieb mit einer Netzwechselspannung und zwischen dem dem Ausgangselement (14, 14') zugeordneten Ausgang (21, 21') der Zentraleinheit (15) und dem Ausgangselement (14, 14') für den Betrieb mit einer Kleinspannung konfiguriert sind.

2. Zentrale nach Anspruch 1, wobei den Schaltkreisen (25, 25') jeweils ein separater Eingang (20, 20') und jeweils ein separater Ausgang (21, 21') der Zentraleinheit (15) zugeordnet ist.

3. Zentrale nach mindestens einem der vorangehenden Ansprüche, wobei die Ausgangselemente (14, 14') jeweils ein Relais oder einen anderen steuerbaren elektrischen Schalter aufweisen.

4. Zentrale nach mindestens einem der vorangehenden Ansprüche, wobei in jedem der Schaltkreise (25, 25') ein mit der Zentraleinheit (15) elektrisch verbundenes Eingangselement (16, 16') vorgesehen ist, das einerseits mit einem jeweils zugeordneten Eingang (20, 20') der Zentraleinheit (15) verbunden und andererseits mit dem elektrischen Bauelement (18, 18') elektrisch verbindbar ist, wobei die Schaltkreise (25, 25') zwischen dem Eingangselement (16, 16') und dem einbindbaren elektrischen Bauelement (18, 18') für den Betrieb mit der Netzwechselspannung und zwischen dem dem Eingangselement (16, 16') zugeordneten Eingang (20, 20') der Zentraleinheit (15) und dem Eingangselement (14, 14') für den Betrieb mit der Kleinspannung konfiguriert sind.

5. Zentrale nach Anspruch 4, wobei die Eingangselemente (16, 16') jeweils ein Relais oder einen anderen steuerbaren elektrischen Schalter aufweisen.

6. Zentrale nach mindestens einem der vorangehenden Ansprüche, wobei in mindestens einem der Schaltkreise, insbesondere in jedem der Schaltkreise (25, 25'), ein Überbrückungsmittel (17, 17') zur elektrischen Überbrückung der Zentraleinheit (15) und des dem jeweiligen Schaltkreis (25, 25') zugeordneten Ausgangslementes (14, 14') oder zur elektrischen Überbrückung der Zentraleinheit (15), des dem jeweiligen Schaltkreis (25, 25') zugeordneten Ausgangslementes (14, 14') und des dem jeweiligen Schaltkreis (25, 25') zugeordneten Elngangselementes (16, 16') vorgesehen ist.

7. Zentrale nach mindestens einem der vorangehenden Ansprüche, wobei die Zentrale (11) ein Schaltschrank ist, in dem die programmierbare Zentraleinheit (15) und die Ausgangselemente (14, 14') oder die programmierbare Zentraleinheit (15), die Ausgangselemente (14, 14'), die optional vorhandenen Eingangselemente (16, 16') und die Überbrückungsmittel (17, 17') angeordnet sind.

8. System zur Steuerung von Funktionseinrichtungen in und/oder im Umfeld von Gebäuden, wobei das System (10) eine Zentrale (11) nach einem der vorangehenden Ansprüche aufweist, wobei in die Schaltkreise (25, 25') jeweils mindestens ein nicht adressierbares elektrisches Bauelement (18, 18'), das mittels der Zentrale (11) steuerbar und/oder regelbar ist, sowie die Zentraleinheit (15) elektrisch eingebunden ist, wobei der Zentrale (11) mindestens eine Eingabeeinrichtung (12) zugeordnet ist, mit der die Zentraleinheit (15) steuerbar und/oder programmierbar und über die ein Übertragen eines elektrischen Signals an das elektrische Bauelement (18, 18') und/oder ein Schalten der Schaltkreise (25, 25') veranlassbar ist, wobei in jedem der Schaltkreise (25, 25') ein von der Zentraleinheit (15) elektrisch ansteuerbares oder schaltbares Ausgangselement (14, 14') vorgesehen ist, das der Zentrale (11) zugeordnet und einerseits mit einem dem Ausgangselement (14, 14') jeweils zugeordneten Ausgang (21, 21') der Zentraleinheit (15) und andererseits mit dem elektrischen Bauelement (18, 18') elektrisch verbunden ist, sowie jedem der Schaltkreise (25, 25') ein Eingang (20, 20') der Zentraleinheit (15) zugeordnet ist, und wobei die Schaltkreise (25, 25') zwischen dem Ausgangselement (14, 14') und dem elektrischen Bauelement (18, 18') für den Betrieb mit einer Netzwechselspannung und zwischen dem dem Ausgangselement (14, 14') zugeordneten Ausgang (21, 21') der Zentraleinheit (15) und dem Ausgangselement (14, 14') für den Betrieb mit einer Kleinspannung konfiguriert sind.

9. System nach Anspruch 8, wobei die Eingabeeinrichtung (12) einen berührungsempfindlichen Bildschirm aufweist.

10. System nach mindestens einem der vorangehenden Ansprüche 8 oder 9, wobei die Zentraleinheit (15) mit mindestens einem Signalgeber (13, 13'), insbesondere einem eine Wetterstation umfassenden Signalgeber, verbunden ist.

11. System nach mindestens einem der vorangehenden Ansprüche 8 bis 10. wobei in jedem der Schaltkreise (25, 25') ein mit der Zentraleinheit (15) elektrisch verbundenes Eingangselement (16, 16') vorgesehen ist, das der Zentrale (11) zugeordnet und einerseits mit einem jeweils zugeordneten Eingang (20, 20') der Zentraleinheit (15) und andererseits mit dem elektrischen Bauelement (18, 18') elektrisch verbunden ist, wobei die Schaltkreise (25, 25') zwischen dem Eingangselement (16, 16') und dem elektrischen Bauelement (18, 18') für den Betrieb mit der Netzwechselspannung und zwischen dem dem Eingangselement (16, 16') zugeordneten Eingang (20, 20') der Zentraleinheit (15) und dem Eingangselement (14, 14') für den Betrieb mit der Kleinspannung konfiguriert sind.

12. System nach mindestens einem der vorangehenden Ansprüchen 8 bis 11, wobei das elektrische Bauelement (18, 18') ein elektrischer Verbraucher ist.

13. System nach mindestens einem der vorangehenden Ansprüche, wobei die Zentraleinheit (15) oder die Eingabeeinrichtung (12) mindestens eine Kommunikationsschnittstelle (22) aufweist, über die extern mit einem Kommunikationsmittel, insbesondere mittels Internet oder internetfähigem Mobilfunktelefon, auf die Zentraleinheit (15) eingewirkt werden kann, der Betriebszustand der Zentraleinheit (15) geprüft und/oder die Programmierung der Zentraleinheit (15) verändert werden kann.

14. System nach mindestens einem der vorangehenden Ansprüche, wobei die die Zentraleinheit (15) oder die Eingabeeinrichtung (12) mindestens eine Kommunikationsschnittstelle (23) aufweist, über die die Zentraleinheit (15) eine Information oder ein Signal, insbesondere über den Betriebszustand der Zentraleinheit (15), die Progammierung der Zentraleinheit oder eine Alarmierung, einem externen Kommunikationsmittel, insbesondere einem Computer, dem Internet, oder einem intemetfähigen Mobilfunktelefon, übermitteln kann.

15. Verfahren zur Steuerung von Funktionseinrichtungen in und/oder im Umfeld von Gebäuden mit einem System nach mindestens einem der vorangehenden Ansprüche, wobei das jeweils mindestens eine nicht adressierbare elektrische Bauelement (18, 18') mittels der Zentrale (11) gesteuert und/oder geregelt wird, und wobei die Zentraleinheit (15) über die Eingabeeinrichtung (12) gesteuert und/oder programmiert und darüber ein Übertragen eines elektrischen Signals an das elektrische Bauelement (18, 18') und/oder ein Schalten der Schaltkreise (25, 25') bewirkt wird.
